# EUROPEAN PATENT SPECIFICATION

(11) **EP 1 787 376 B1**
(45) Date of publication and mention of the grant of the patent: **27.06.2012**
(21) Application number: 05773139.0
(22) Date of filing: 26.07.2005
(51) Int. Cl.: H02J 7/00

(54) **ELECTRICAL CHARGING OR SUPPLY DEVICE**
ELEKTRISCHE LADE- ODER VERSORGUNGSEINRICHTUNG
CHARGE ELECTRIQUE OU DISPOSITIF D'ALIMENTATION

(30) Priority: 18.08.2004 ES 200402047 P
(43) Date of publication of application: 23.05.2007
(73) Proprietor: Giribet Guadamillas, Jacques, 08021 Barcelona (ES)
(72) Inventor: Giribet Guadamillas, Jacques, 08021 Barcelona (ES)
(74) Representative: Sugrañes Patentes y Marcas
(86) International application number: PCT/EP2005/008104
(87) International publication number: WO 2006/018103

(56) References cited:
- GB-A- 2 260 040
- US-A- 4 509 450
- US-A- 5 280 229
- US-A- 6 064 177
- US-A1- 2002 115 480
- US-A1- 2003 141 840

## Description

### Technical Field of the Invention

The present invention relates to an electrical charging or supply device for electric apparatus without a permanent source of electricity.

### Background to the Invention

At the moment there are a large number of personal electrical apparatus, such as mobile telephones, laptop computers, palmtop computers, photographic cameras, music players or video cameras, etc. that have an electric battery as their energy supply.

The variety of devices leads to the problem that each apparatus has its own adaptor to recharge its battery, which is different from other adaptors for other apparatus. For example, the different brands of mobile telephone manufacturers have adaptors for the various telephones that are different even within the same range, which means that different chargers are needed to attach to the respective different adaptors.

These chargers have electrical converters or transformers and generally they are adapted to connect at one end to an electricity supply, such as the low voltage electricity grid that houses and offices normally have and, at the other end, they have connectors which establish the electrical connection with the electrical apparatus adaptor in question.

Patent document US 6064177 discloses a system to recharge electrical apparatus that has different adaptors. The system incorporates a first portion of electrical cable adapted to connect, through a transformer, to the mains electricity supply with a standard connection using terminals whose free end has a male connector. The system further comprises a second portion of electrical cable, which at one end has the corresponding female connector that attaches to the male connector on the first portion of cable, and the opposite end has a specific connector for the electrical apparatus. The inventor plans to provide different versions of said second portion of cable that has different specific connectors for each electrical apparatus but the same female connector at the opposite end. Therefore, the system can be adapted to different electrical apparatus, by substituting the second portion of cable and keeping the first portion connected to the mains supply.

There are other types of charging devices wherein various connectors are built into the same casing that are permanently connected to the transformer or charger terminals, making it unnecessary to connect and disconnect the part that has the specific connectors for each electrical apparatus to a fixed part. A embodiment is described in the patent document GB 2260040, wherein three different connectors are integrated into the same casing. Nevertheless the continuous variation in the configuration of the electrical apparatus adaptors rapidly makes this type of device become obsolete since the connectors cannot be replaced.

Document US2002/0115480A discloses a charging adaptor set in which a charging station is equipped with a plurality of removable charging adaptors. This has the disadvantage that the user is required to keep these adaptors separately from the charger and thus risk loosing these adaptors.

Furthermore, the fact that the connectors of the device are simultaneously connected to the power supply through the same transformer can create problems since not all the apparatus charge at the same nominal voltage and power intensity, and if two apparatus are connected at the same time they could be damaged due to deficiencies in the connection or they could overload the transformer. Similarly, since the connectors are always accessible from the outside, the connection slots can easily become dirty, which could lead to an incorrect charging of the electrical apparatus.

### Explanation of the Invention

The charging device which is the object of the invention overcomes said drawbacks and it is designed for the electrical supply of electrical apparatus without a permanent power supply. The charging device has a casing that houses various connectors adapted to electrically connect at least one electrical apparatus to the power supply. Said connectors can have different configuration thus the same charging device allows electrical apparatus with different connection configurations to connect to the power supply.

In essence, the charging device is characterised in that the charging device comprises support means for the connectors and said connectors are removable and can be replaced or substituted by connectors that have a different configuration for the electrical apparatus. The connectors attached to the power supply are accessible from the outside of the casing to be attached to the electrical apparatus. Furthermore, the charging device also comprises displacement means adapted to displace said support means, and therefore the connectors, or power supply connectors, from a resting or open connection position to an operative or closed connection position, wherein at least one connector is connected to the power supply through its terminals. In the operative position the connectors attached to the power supply are accessible from the outside of the casing to be attached to the electrical apparatus.

In the preferred embodiment the displacement means are made of a rotating attachment between the support means of the connectors and the casing, and the support means, and therefore the connectors, are joined to the rotating attachment at coplanar points at the same distance from the rotation axis thereof.

In another preferred embodiment, the displacement means are comprised of a rotating attachment between a support base of the terminal and the casing, and the connectors are placed in coplanar arrangement in the support means, flexibly joined to the casing, and at the same distance from the rotation axis of the terminal support base.

According to another characteristic of the invention, in the operative position, the closed contact between the connector and the power supply terminals is established automatically through elastic devices that force the electrical connection between the connector and the terminals.

According to another embodiment in the operative position the electrical connection between the connector and the power supply terminals is established manually through a button or similar.

### Brief description of the drawings

The enclosed drawings Fig. 1 to 5 and 7 illustrate, by way of non-limiting example, various preferred embodiments of the charging device object of the invention. Fig. 6 is merely an embodiment of a charging device which is not covered by the invention. In said drawings:
- Fig. 1: is a perspective, exploded view of the first preferred embodiment of the charging device according to the invention;
- Fig. 2: is the perspective view of the first embodiment of the charging device in resting position A;
- Fig. 3: is a cross-section of the first embodiment of the charging device in the operative position B;
- Fig. 4,: is a perspective view of the second embodiment of the charging device according to the invention in resting position A;
- Fig. 5,: is a cross-section of the second embodiment of the charging device in operative position B;
- Fig. 6: corresponds to a perspective, exploded view of an embodiment of a charging device not covered by the invention; and
- Fig. 7: shows another perspective view of a third embodiment of the charging device according to the invention.

### Detailed Description of the Drawings

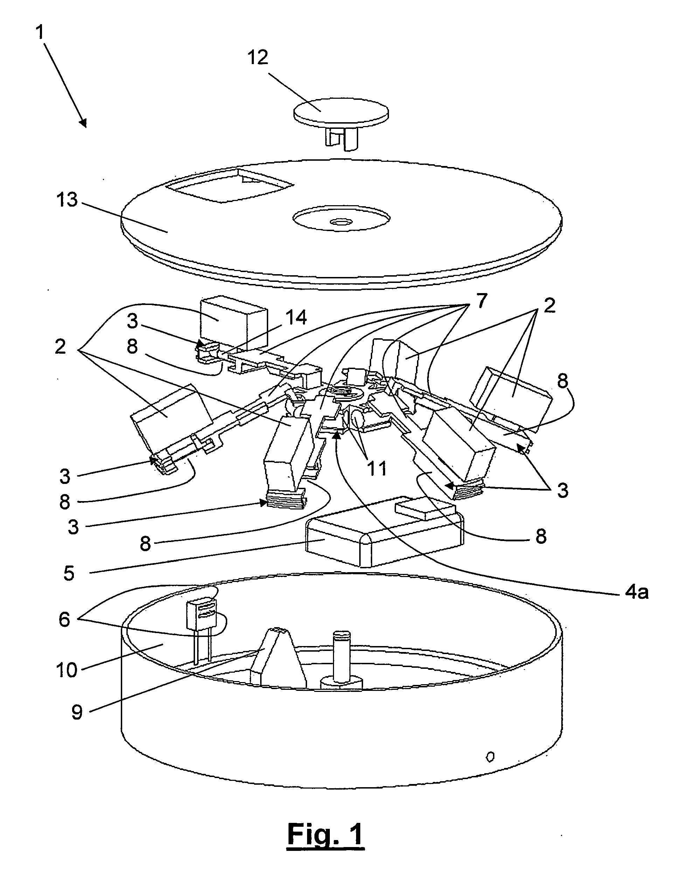

Figs. 1 to 5 and 7 show different embodiments for the charging device 1 object of the invention which is comprises a casing that houses various connectors 2 adapted to connect at least one of the electrical apparatus, not represented in the drawings, to a power supply 5, consisting of, for example, a reducing transformer. Said connectors 2 can have different configurations although to simplify the diagrams, said connectors 2 are represented in Figs. 1 to 7 by a cuboid. Thus in each embodiment, the same charging device 1 allows the electrical attachment of electrical apparatus with different connection configurations to the electrical supply.

Figs. 1 to 3, show the first embodiment wherein the support means 3 of the connectors 2 are made by the corresponding arms 7. An electrical charging or supply device 1 has a fixed block 9, and the arms 7 are flexibly joined to the displacement means 4a, and can turn with respect to the base 10 of the charging device 1, the arms 7 being radially connected by a joint 11 to the displacement means 4a, so that it is possible to attach a connector 2 to the free end 8 of each of the arms 7. The displacement means 4a comprise a turning control 12 accessible from outside the device 1 so that using this, the displacement means 4a are operated.

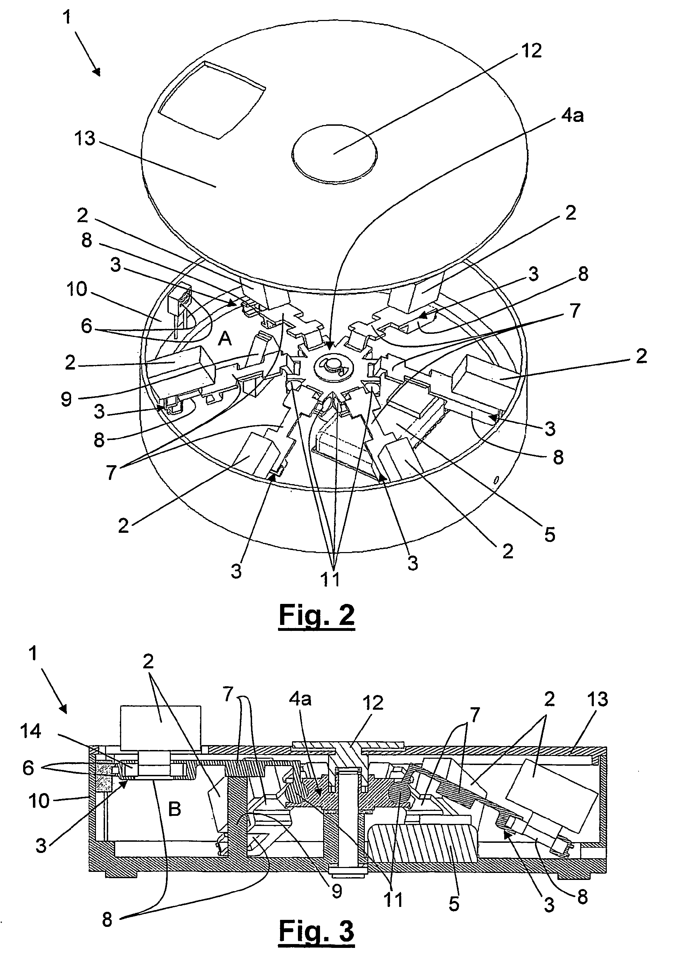

Fig. 2, shows the device 1 in resting position A or open connection, showing the cover 13 of the casing and the turning control 12 separated from the rest of the device to aid viewing. In said position, the terminals 6 of the power supply 5 are free of electrical contact and therefore the device 1 is not operative.

When turning the displacement means 4a, the block 9 moves one of the arms 7 taking it to operative position B, wherein the connector 2 establishes electrical contact automatically with the power supply 5 through terminals 6 by the elastic devices that force said connection. As you can see in Fig. 3, the connector 2 in operative position B is accessible from outside the casing to allow its attachment to the electrical apparatus, whilst the rest of the connectors are housed inside the casing.

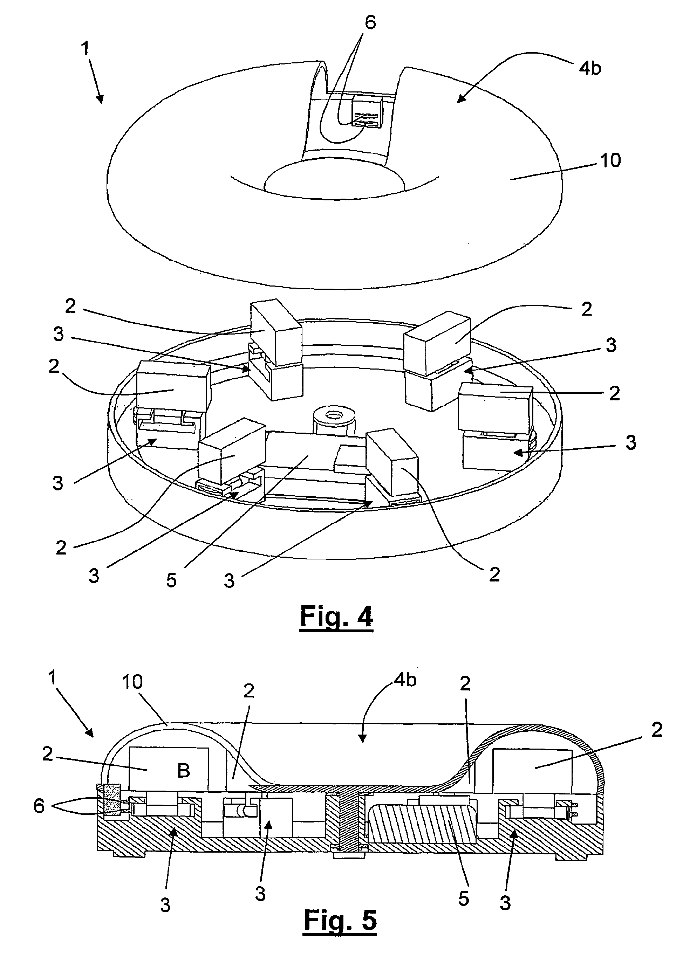

Figs. 4 and 5, show a second embodiment wherein the displacement means 4a or 4b are comprised of a rotating attachment 4b between the terminals 6 support base 10 and the casing. In Fig. 4 the base 10 and the terminals 6 are shown apart from the rest of the device to aid viewing. The connectors 2 are placed in coplanar arrangement in the support means 3, soldered to the casing, and at the same distance from the rotation axis of the terminal support base 6.

Unlike the first embodiment, the movement of the rotating attachment 4b moves the terminals 6, and the connectors 2 remain static, and passing, as in the first embodiment, from a resting position A, or of open connection, to an operative position B, or closed connection and viceversa.

Fig. 5 represents the device 1 in the operative position B, wherein the connector 2 establishes electrical contact with the power supply 5, through the terminals 6, so that said connector 2 when connected to the power supply 5 is accessible from outside the casing to allow connection to the electrical apparatus.

In all of these cases, the connectors 2 are coupled to the support means 3. Figs. 1 to 5 shows an attaching system for the connectors' 2 lateral connection and disconnection, to guarantee that they remain in their position when being attached to and removed from the electrical apparatus. Obviously, this invention includes other configurations for said attachments other than those represented.

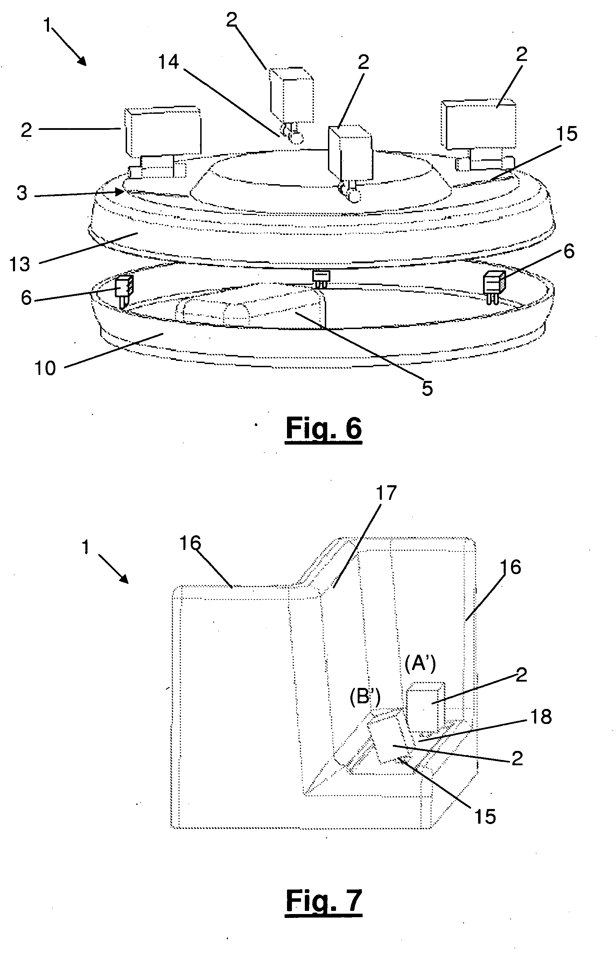

Fig. 6 shows a charging device which is not covered by the invention, whose connectors 2 are easily interchangeable because they have an extension 14 that can connect to the support means 3, that in this case are made of a slot 15 made in the cover 13 of the device casing. The connectors 2 are fixed and supported by the joint effect of this slot 15 and the cover 13. In the same figure appears the base 10 wherein they have placed the power supply 5 and various terminals 6 connecting with said power supply 5. A configuration of this type, with the connectors 2 fixed to the support means 3, allows to replace or substitute the connectors 2 of one type or sort for connectors 2 of another type or sort according to the model of the electrical apparatus to be connected to the electrical supply. Also, it allows the connectors 2 that should be employed and that are connected to the power supply 5, to be accessible from outside the casing of the device.

The charging device as schematically shown in Fig. 6, is a simple device which also allows the simultaneous charging of various electrical apparatus, for example the charging of various mobile telephones. As the connectors 2 are removable and interchangeable, with such device it can be provided multiple combinations of electrical apparatus at the same time, by substituting the connectors 2 that are not suitable for others that are compatible with the apparatus you wish to charge.

Fig. 7 represents a third embodiment of the electrical charging or supply device 1 according to the invention. This embodiment has an external form that is completely different to those in Figs. 1 to 6, but has the same characteristics. Thus, said device 1 has two compartments 16 that are comprised of a base 18 adapted to accommodate the changeable connectors 2, that in the case shown are two but obviously it could be more. It is understood that, inside said base 18 there are all the elements necessary to connect to the electricity supply. You can see that one of the connectors 2 is slightly inclined with respect to the vertical axis of the charging device 1. This is because it is foreseen that in the vertical position there is no contact with the power supply terminals 6 (that you cannot see in this figure), and this connection could be made by inserting the connectors 2 in the slot 15 and then inclining the latter so that they make contact with terminals 6. Said movement of the connector 2 provides at least two positions: one resting position (A'), or open connection, and a second operative position or closed connection (B').

It should be pointed out that in the device 1, according to Fig. 7, at the same time as passing from resting position (A') to the operative position (B'), the electrical apparatus to be charged by the charger 1 object of the invention moves from the vertical position where it is attached to the connector 2, to a stable position wherein a support element 17 takes part of its weight, and the electrical apparatus stays in this charging position until disconnection. This support element 17, that in the case represented is a vertical wall can also be according to Figs, 1 to 6, cylindrical in the central area of the charging device 1.

Obviously this technical solution of building a charging device connectors 2 which are removably coupled to support means 3, when both removable connectors 2 accessible from outside the casing, is applicable to any charging device form 1 and to different types of connectors 2 adapted for different electrical apparatus without being out of the scope of this invention. Thus, any variation in the form or size of the device 1 is also within the scope of the invention as defined by the appended claims.

## Claims

1. Electrical charging or supply device (1) for electrical apparatus without a permanent power source, that comprises a casing that houses various connectors (2) adapted to electrically connect at least one electrical apparatus to a power supply (5), said connectors (2) being able to have a different configuration so that the charging device (1) allows the electrical attachment of electrical apparatus to different connection configurations to the electrical supply; and support means (3) for the connectors (2), said connectors (2) being attached to the support means (3) so that they can be removed and replaced or substituted by connectors of different configuration regarding the electrical apparatus, in such a way that the connectors (2) connected to the power supply (5) are accessible from outside the casing to be attached to the electrical apparatus, **characterised in that** further comprises displacement means (4a, 4b) adapted to move said support means (3), and therefore the connectors, or the terminals (6) to connect to the power supply (5), from a resting position (A), of open connection, to an operative position (B), of closed connection, wherein at least one connector (2) is electrically connected to the power supply (5) through the terminals (6) of the latter so that in the operative position (B), the connectors (2) connected to the power supply (5) are accessible from outside the casing to allow attachment to the electrical apparatus.

2. Electrical charging or supply device (1) according to the previous claim, **characterised in that** the displacement means (4a, 4b) are made of a rotating attachment (4a) between the support means (3) of the connectors (2) and the casing, and **in that** the support means (3), and therefore connectors (2), are joined to the rotating attachment (4a) at coplanar points and at the same distance regarding the rotation axis of the latter.

3. Electrical charging or supply device (1) according to claim 1, **characterised in that** the displacement means (4a, 4b) are made of a rotating attachment (4b) between a support base of the terminal (6) and the casing, and **in that** the connectors (2) are placed in coplanar arrangement in the support means (3), flexibly joined to the casing, and at the same distance from the rotation axis of the terminal support base (6).

4. Electrical charging or supply device (1) according to the previous claims, **characterised in that**, in the operative position (B), the closed contact between the connector (2) and the terminals (6) of the power supply is established automatically, by the action of elastic devices that force the electric connection between the connector (2) and the terminals (6).

5. Electrical charging or supply device (1) according to any of claims 1 to 3, **characterised in that** in the operative position (B), the electrical connection between the connector (2) and the terminals (6) of the power supply is established manually, through a button or similar.

## Patentansprüche

1. Elektrische Lade- oder Versorgungsvorrichtung (1) für elektrische Geräte ohne einer permanenten Stromquelle, umfassend ein Gehäuse, das mehrere Stecker (2) aufnimmt, welche dazu angepasst sind, mindestens ein elektrisches Gerät an eine Stromversorgung (5) elektrisch anzuschließen, wobei die genannten Stecker (2) eine verschiedene Ausbildung haben können, so dass die Ladevorrichtung (1) die elektrische Kopplung von elektrischen Geräten mit verschiedenen Anschlussausbildungen an die elektrische Versorgung ermöglichen; und umfassend Tragemittel (3) für die Stecker (2), wobei die genannten Stecker (2) mit den Tragemitteln (3) gekoppelt sind, so dass diese entfernt und gegen Stecker mit einer verschiedenen Ausbildung in Bezug auf das elektrische Gerät ausgetauscht oder ausgewechselt werden können, so dass die an die Stromversorgung (5) angeschlossenen Stecker (2) von außerhalb des an das elektrische Gerät zu koppelnde Gehäuses zugänglich sind, **dadurch gekennzeichnet, dass** sie zusätzlich Verschiebungsmittel (4a, 4b) umfasst, welche dazu angepasst sind, die genannten Tragemittel (3), und damit die Stecker, oder die Klemmen (6) für ihren Anschluss mit der Stromversorgung (5), von einer Ruhestellung (A), mit einem offenen Anschluss, zu einer operativen Stellung (B), mit einem geschlossenen Anschluss, zu bewegen, wobei mindestens ein Stecker (2) an die Stromversorgung (5) durch die Klemmen (6) derselben elektrisch angeschlossen ist, so dass in der operativen Stellung (B), die an die Stromversorgung (5) angeschlossenen Stecker (2) von außerhalb des Gehäuses zugänglich sind, um die Kopplung mit dem elektrischen Gerät zu ermöglichen.

2. Elektrische Lade- oder Versorgungsvorrichtung (1) nach dem vorstehenden Anspruch, **dadurch gekennzeichnet, dass** die Verschiebungsmittel (4a, 4b) aus einer rotierenden Kopplung (4a) zwischen den Tragemitteln (3) der Stecker (2) und dem Gehäuse bestehen, und dass die Tragemittel (3), und damit die Stecker (2), mit der rotierenden Kopplung (4a) an koplanaren Stellen und mit demselben Abstand in Bezug auf die Rotationsachse derselben verbunden sind.

3. Elektrische Lade- oder Versorgungsvorrichtung (1) nach Anspruch 1, **dadurch gekennzeichnet, dass** die Verschiebungsmittel (4a, 4b) aus einer rotierenden Kopplung (4b) zwischen einer Tragebasis der Klemme (6) und dem Gehäuse bestehen, und dass die Stecker (2) in einer koplanaren Anordnung in den Tragemitteln (3), unter flexibler Verbindung mit dem Gehäuse, und mit demselben Abstand von der Rotationsachse der Tragebasis der Klemme (6), angebracht sind.

4. Elektrische Lade- oder Versorgungsvorrichtung (1) nach den vorstehenden Ansprüchen, **dadurch gekennzeichnet, dass**, in der operativen Stellung (B), der geschlossene Anschluss zwischen dem Stecker (2) und den Klemmen (6) der Stromversorgung automatisch durch die Wirkung von elastischen Vorrichtungen hergestellt wird, welche den elektrischen Anschluss zwischen dem Stecker (2) und den Klemmen (6) herstellt.

5. Elektrische Lade- oder Versorgungsvorrichtung (1) nach einem der Ansprüche 1 bis 3, **dadurch gekennzeichnet, dass** in der operativen Stellung (B), der elektrische Anschluss zwischen dem Stecker (2) und den Klemmen (6) der Stromversorgung, mittels einem Knopf oder ähnlichem, manuell hergestellt wird.

## Revendications

1. Dispositif de chargement ou alimentation électrique (1) pour appareil électrique sans une source d'alimentation permanente, qui comprend une carcasse qui loge divers connecteurs (2) adaptés pour connecter électriquement au moins un appareil électrique à une source d'alimentation (5), lesdits connecteurs (2) pouvant avoir une configuration différente de manière que le dispositif de chargement (1) permet l'accouplement électrique de l'appareil électrique ayant différentes configurations de connexion à l'alimentation électrique; et des moyens de support (3) pour les connecteurs (2), lesdits connecteurs (2) étant accouplés aux moyens de support (3) de manière qu'ils peuvent être retirés et remplacés ou substitués par des connecteurs de différentes configuration par rapport à l'appareil électrique, de telle manière que les connecteurs (2) connectés à la source d'alimentation (5) sont accessible depuis l'extérieur de la carcasse à accoupler à l'appareil électrique, **caractérisé en ce qu'**il comprend, en outre, des moyens de déplacement (4a, 4b) adaptés pour déplacer lesdits moyens de support (3), et donc les connecteurs, ou les bornes (6) pour la connexion à la source d'alimentation (5), à partir d'une position de repos (A), de connexion ouverte, à une position opérationnelle (B), de connexion fermée, où au moins un connecteur (2) est connecté électriquement à la source d'alimentation (5) à travers les bornes (6) de celle-ci de manière à ce que dans la position opérationnelle (B), les connecteurs (2) connectés à la source d'alimentation (5) sont accessible depuis l'extérieur de la carcasse pour permettre l'accouplement à l'appareil électrique.

2. Dispositif de chargement ou alimentation électrique (1) selon la revendication précédente, **caractérisé en ce que** les moyens de déplacement (4a, 4b) sont constitués par un accouplement rotatif (4a) entre les moyens de support (3) des connecteurs (2) et la carcasse, et **en ce que** les moyens de support (3), et donc les connecteurs (2), sont unis à l'accouplement rotatif (4a) à des points coplanaires et à la même distance par rapport à l'axe de rotation de ceux-ci.

3. Dispositif de chargement ou alimentation électrique (1) selon la revendication 1, **caractérisé en ce que** les moyens de déplacement (4a, 4b) sont constitués d'un accouplement rotatif (4b) entre une base de support de la borne (6) et la carcasse, et **en ce que** les connecteurs (2) sont disposés dans une disposition coplanaire sur les moyens de support (3), unis de manière flexible à la carcasse, et à la même distance de l'axe de rotation de la base de support de la borne (6).

4. Dispositif de chargement ou alimentation électrique (1) selon les revendications précédentes, **caractérisé en ce que** dans la position opérationnelle (B), le contact intime entre le connecteur (2) et les bornes (6) de la source d'alimentation est établi automatiquement, par l'action de dispositifs élastiques qui forcent la connexion électrique entre le connecteur (2) et les bornes (6).

5. Dispositif de chargement ou alimentation électrique (1) selon l'une quelconque des revendications 1 à 3, **caractérisé en ce que** dans la position opérationnelle (B), la connexion électrique entre le connecteur (2) et les bornes (6) de la source d'alimentation est établie manuellement, par le biais d'un bouton ou analogue.
